(19) Europäisches Patentamt
European Patent Office
Office européen des brevets

(11) Numéro de publication : **0 328 567 B1**

(12) # FASCICULE DE BREVET EUROPEEN

(45) Date de publication du fascicule du brevet :
**29.01.92 Bulletin 92/05**

(51) Int. Cl.$^5$ : **C23F 15/00,** C02F 5/02

(21) Numéro de dépôt : **88905388.0**

(22) Date de dépôt : **09.06.88**

(86) Numéro de dépôt international :
**PCT/FR88/00294**

(87) Numéro de publication internationale :
**WO 88/09832 15.12.88 Gazette 88/27**

(54) **PROCEDE ET INSTALLATION POUR PROTEGER LES CANALISATIONS D'EAU CONTRE LA CORROSION.**

(30) Priorité : **12.06.87 FR 8708198**

(43) Date de publication de la demande :
**23.08.89 Bulletin 89/34**

(45) Mention de la délivrance du brevet :
**29.01.92 Bulletin 92/05**

(84) Etats contractants désignés :
**AT BE CH DE GB IT LI LU NL SE**

(56) Documents cités :
**EP-A- 0 178 729**
**BE-A- 552 541**
**FR-A- 2 446 260**
**US-A- 1 683 521**
**US-A- 3 640 759**
**Intern. Water Supply Assoc. proceedings of the 11th Congress, 13-17.Sept. 1976, Amsterdam, G.Poirier et al.:"Chimie des eaux naturelles considérations particulières sur les caractères d'agressivité"**

(56) Documents cités :
**Industrial and Engineering Chemistry, vol. 37, no. 9, 13. sept. 1945, American Chemical Society, US, S.T.Powell et al.:"Corrosion prevention by controlled calcium", carbonate Scale"**

(73) Titulaire : **LEGRAND, Luc**
**6, résidence Péguy**
**F-92340 Bourg-La-Reine (FR)**
Titulaire : **LEROY, Pierre**
**1, rue des Platanes**
**F-94600 Choisy-le-Roi (FR)**

(72) Inventeur : **LEGRAND, Luc**
**6, résidence Péguy**
**F-92340 Bourg-La-Reine (FR)**
Inventeur : **LEROY, Pierre**
**1, rue des Platanes**
**F-94600 Choisy-le-Roi (FR)**

(74) Mandataire : **Bouju, André**
**Cabinet André Bouju B.P. 6250**
**F-75818 Paris Cédex 17 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

La présente invention concerne un procédé et une installation permettant d'éviter la corrosion des parois intérieures en métaux ferreux ou à base de ciment des canalisations de transport de l'eau.

L'eau transportée dans les réseaux de canalisations peut être en contact avec des métaux ferreux (fonte, acier, acier galvanisé) ou des matériaux à base de ciment (revêtements en mortier de ciment des canalisations métalliques, béton armé, amiante-ciment). Pour éviter à la fois la corrosion des métaux ferreux et celle des matériaux à base de ciment, il est indispensable que cette eau soit susceptible de donner naissance à un dépôt protecteur de carbonate de calcium ($CaCO_3$). Autrement dit, elle doit être incrustante.

Sur le graphique $CO_2$ total - $Ca^{2+}$ (cf. Les équilibres carboniques et l'équilibre calcocarbonique dans les eaux naturelles, Eyrolles 1981, des présents déposants), le point figuratif de la composition d'une telle eau doit répondre aux conditions ci-après (voir figures 1 et 2) :

– Il doit être situé à droite de la courbe d'équilibre calcocarbonique (courbe C). En effet, les eaux figurées à gauche de cette courbe sont agressives vis-à-vis de $CaCO_3$ solide.

– Il doit être situé à gauche de la courbe de précipitation spontanée de $CaCO_3$ (courbe C'). En effet, les eaux figurées à droite de cette courbe, qui sont instables, voient se former et se développer en leur sein des germes de $CaCO_3$ solide ne pouvant pas donner naissance à un dépôt adhérent sur les parois des canalisations.

– Il doit être légèrement à droite de la courbe C. S'il n'en était pas ainsi, l'épaisseur du dépôt de $CaCO_3$ formé sur les parois des canalisations pourrait être excessive.

– Il doit être situé au-dessus de la demi-droite SX, de pente 2. Sinon, d'une part la formation du dépôt de $CaCO_3$ solide pourrait être compromise, d'autre part la désinfection par le chlore de l'eau transportée ne serait pas assurée, son pH étant trop élevé. L'abscisse du point S de la demi-droite SX est fonction de la concentration en ions

$$SO_4^{2-},\ Cl^-,\ NO_3^-,\ Mg^{2+},\ Na^+ \text{ et } K^+$$

On sait que les eaux dont on dispose sont fréquemment agressives vis-à-vis de $CaCO_3$ solide. Il est possible de les rendre incrustantes par une addition de chaux ($Ca(OH)_2$), qui doit être précédée éventuellement d'une addition de dioxyde de carbone ($CO_2$).

Sous l'effet de l'addition de $Ca(OH)_2$, le point figuratif de l'eau passe de $M_1$ situé à gauche de la courbe C en $M_2$ situé légèrement à droite de la courbe C (voir figures 3, 4, 5 et 6). Il passe au préalable de $M_0$ en $M_1$ sous l'effet de l'addition de $CO_2$, qui est nécessaire lorsque la seule addition de $Ca(OH)_2$ ne permet pas à l'eau traitée d'être figurée au-dessus de la demi-droite SX, de pente 2 (voir figures 5 et 6).

L'industrie chimique fournit la chaux sous forme de poudre. La mise en oeuvre de la chaux sous cette forme solide n'est possible qu'aux deux conditions ci-après :

– l'eau doit subir un traitement de clarification avant d'être introduite dans le réseau, ce traitement comprenant successivement une floculation, éventuellement une décantation, enfin une filtration. La chaux est alors ajoutée à l'eau avant la floculation;

– le coagulant utilisé ne doit pas être un sel d'aluminium. En effet, rendre l'eau légèrement calcifiante par une addition de chaux a pour conséquence une élévation du pH. Si le coagulant utilisé était un sel d'aluminium, le risque serait que l'eau issue de la station de traitement présent une concentration en ions $Al^{3+}$ supérieure à la concentration maximale fixée par les normes sanitaires.

Si ces conditions ne sont pas reunies, la chaux doit être introduite dans l'eau sous forme d'une solution, dite eau de chaux, qui est réalisée dans un saturateur de chaux. Mais, pour les raisons qui seront exposées plus loin, l'utilisation d'un saturateur de chaux du type actuel présente deux inconvénients :

– le volume important de l'appareil ;

– et surtout l'impossibilité de donner naissance à une solution de teneur bien définie en chaux : or, l'addition de $Ca(OH)_2$ à une eau agressive n'assure la formation d'un dépôt protecteur de $CaCO_3$ solide sur les parois intérieures des canalisations d'un réseau que si la concentration en ions $Ca^{2+}$ de l'eau transportée est très précisément celle qui résulte du calcul et qui est représentée sur le graphique par l'abscisse du point $M_2$ des figures 3, 4, 5 et 6.

En conséquence de ce qui précède, les services de distribution d'eau préfèrent généralement utiliser d'autres réactifs que la chaux pour rendre incrustante l'eau agressive vis-à-vis de $CaCO_3$ solide dont ils disposent. Par exemple, ils utilisent la soude que l'on trouve dans le commerce sous la forme d'une solution et qui est donc d'un emploi plus commode que la chaux.

Soit $M_1$ le point figuratif de l'eau agressive à traiter (voir figure 7). Ce point n'est pas modifié par une addition de soude tandis que la courbe d'équilibre calcocarbonique est déplacée vers la gauche et en même temps plus

ou moins déformée. L'eau traitée est donc susceptible d'être incrustante, ce qui est le cas constaté sur la figure 7. Mais deux observations doivent être présentées :

– la soude coûte plus cher que la chaux à effet égal : si le segment $M_1M_2$ des figures 3, 4, 5 et 6 représente par exemple 0,25 millimole par litre, la fourniture nécessaire de soude par $m^3$ d'eau traitée, soit 20 g de NaOH, coûte en France environ 2,5 centimes, tandis que la fourniture nécessaire de chaux par $m^3$ d'eau traitée, soit 18,5g de $Ca(OH)_2$, ne coûte qu'environ 1 centime ;

– si l'eau dont on dispose présente une concentration en ions $Ca^{2+}$ faible ne dépassant par environ 0,6 millimole par litre, une addition de soude, précédée ou non d'une addition de dioxyde de carbone, ne permet pas d'obtenir une eau calcifiante figurée au-dessus de la demi-droite SX, sauf à mettre en oeuvre des doses excessives de réactifs (voir figure 8).

Les services de distribution d'eau ont maintenant parfois tendance à utiliser des inhibiteurs de corrosion, et par exemple des polyphosphates qui conduisent à la formation d'un film de polyphosphate ferrique sur les parois intérieures en métal ferreux des canalisations. Ces réactifs, que l'on trouve dans le commerce sous la forme de solutions, sont en effet faciles à mettre en oeuvre et les doses sont déterminées expérimentalement sans qu'une grande précision ne soit nécessaire. Mais les inconvénients sont les suivants :

– ils coûtent beaucoup plus cher que la chaux, de 10 à 15 fois plus par $m^3$ d'eau traitée ;

– et surtout, le procédé n'est pas entièrement efficace. En effet, contrairement à un dépôt de $CaCO_3$ solide, un film de polyphosphate ferrique ne peut pas stopper la corrosion d'une paroi en métal ferreux, mais seulement la ralentir. En outre, l'utilisation d'un polyphosphate ne met pas fin à la dégradation d'un matériau à base de ciment.

Le but de la présente invention est de remédier aux inconvénients des procédés connus en fournissant un procédé qui assure une protection efficace des canalisations de transport des eaux et dont la mise en oeuvre est beaucoup moint coûteuse que celle des procédés connus.

L'invention vise un procédé pour protéger contre la corrosion les parois intérieures en métaux ferreux ou à base de ciment des canalisaions d'eau, dans lequel on prélève en continu de l'eau à la canalisation, eau que l'on fait passer dans un saturateur à l'amont duquel on ajoute de la chaux solide, après quoi l'eau est réintroduite dans la canalisation, la quantité de chaux ajoutée à l'eau de la canalisation étant telle que le point figuratif de l'eau après traitement, dans un diagramme où la concentration en $CO_2$ total est en ordonnées et la concentration en $Ca^{2+}$ est en abscisses, est situé dans une zone comprise entre la courbe d'équilibre calcocarbonique et la courbe de précipitation spontanée de $CaCO_3$ et au-dessus de la demi-droite SX de pente égale à 2, S étant situé sur l'axe des abscisses et son abscisse étant fonction de la concentration en ions $SO_4^{2-}$, $Cl^-$, $NO_3^-$, $Mg^{2+}$, $Na^+$ et $K^+$.

Suivant l'invention, ce procédé est caractérisé en ce qu'avant d'être introduite dans le saturateur, l'eau prélevée est mélangée dans un décarbonateur à une solution dépourvue de $CO_2$ total et chargée de chaux provenant du saturateur, le débit de la solution allant du saturateur au décarbonateur étant suffisamment élevé pour permettre l'élimination quasi-complète du $CO_2$ total dans le décarbonateur par précipitation de $CaCO_3$.

Les principaux avantages de ce procédé sont les suivants :

– il permet une dissolution complète de $Ca(OH)_2$ solide,

– l'eau traitée présente en permanence la composition adéquate,

– l'installation pour la mise en oeuvre du procédé présente un volume réduit.

L'installation pour la mise en oeuvre du procédé conforme à l'invention comprend un réservoir de stockage de chaux en poudre, un circuit de dérivation pour prélever l'eau d'une canalisation, un saturateur de chaux placé sur ce circuit de dérivation, des moyens pour introduire la chaux en poudre dans le saturateur.

Suivant l'invention, cette installation est caractérisée en ce que le circuit de dérivation comporte en amont du saturateur, relativement au sens de la circulation de l'eau, un décarbonateur alimenté par l'eau à traiter, en ce que la conduite qui relie la sortie du saturateur à la canalisation comprend une dérivation pour recycler vers le décarbonateur une partie de la solution sortant du saturateur, et en ce que la chaux en poudre est introduite dans la conduite qui relie la sortie du décarbonateur à l'entrée du saturateur.

D'autres particularités et avantages de l'invention apparaîtront encore dans la description ci-après.

Aux dessins annexés donnés à titre d'exemples non limitatifs :

– la figure 1 est un diagramme où la concentration en $CO_2$ total est en ordonnée et la concentration en $Ca^{2+}$ en abscisse, qui représente les courbes d'équilibre calcocarbonique et de précipitation spontanée du carbonate de calcium, l'abscisse du point S étant positive,

– la figure 2 est un diagramme analogue à celui de la figure 1, l'abscisse du point S étant négative,

– les figures 3 et 4 sont des diagrammes analogues aux figures 1 et 2 montrant le déplacement du point figuratif de l'eau après addition de $Ca(OH)_2$

– les figures 5 et 6 sont des diagrammes analogues aux figures 3 et 4, l'addition de $Ca(OH)_2$ étant précédée

par une addition de $CO_2$,

– les figures 7 et 8 sont des diagrammes illustrant l'addition de soude,

– les figures 9 à 11 sont des diagrammes montrant le déplacement du point figuratif de l'eau après addition de chaux à différentes concentrations,

– la figure 12 est le schéma d'un dispositif permettant d'introduire de la chaux solide dans une canalisation d'eau,

– la figure 13 est un diagramme montrant le déplacement du point figuratif de l'eau après addition de chaux au moyen du dispositif selon la figure 12,

– la figure 14 est le shéma d'un dispositif connu d'introduction de chaux solide dans l'eau,

– la figure 15 est un schéma plus détaillé du saturateur du dispositif selon la figure 14,

– la figure 16 est un diagramme où la concentration en $CO_2$ total est en ordonnée et la concentration en $Ca^{2+}$ en abscisse, qui représente les courbes d'équilibre calcocarbonique, de précipitation spontanée de $CaCO_3$ et de saturation en $Ca(OH)_2$ ainsi que les déplacements du point figuratif de l'eau après addition de chaux au moyen du dispositif selon les figures 14 et 15,

– la figure 17 est un schéma d'une installation conforme à l'invention,

– la figure 18 est un schéma détaillé de cette installation,

– la figure 19 est un diagramme analogue à celui de la figure 16, montrant les différents points figuratifs de l'eau obtenus en différents points de l'installation selon l'invention.

On considère un certain volume d'une eau agressive vis-à-vis de $CaCO_3$ solide, représentée en $M_1$ sur le graphique $CO_2$ total - $Ca^{2+}$ (voir figures 9 à 11). Sur ces figures, le terme $\lambda$, abscisse du point S, est supposé positif et il en sera toujours ainsi dans la suite de cette description, celle-ci restant valable si $\lambda$ est négatif. On introduit dans cette eau, et à diverses concentrations, des particules de $Ca(OH)_2$ solide.

<u>1er cas</u> : les particules de $Ca(OH)_2$ solide sont introduites dans l'eau à une dose définie par le segment $M_1M_2$, le point $M_2$ appartenant encore au domaine des eaux agressives (figure 9).

Le système évolue de la manière suivante :

– aussitôt après l'introduction de la chaux dans l'eau considérée, la phase aqueuse devient hétérogène, car sa concentration en ions $Ca^{2+}$, très élevée au voisinage de chaque particule, diminue progressivement à mesure que l'on s'en éloigne ;

– au voisinage de chaque particule, l'eau est donc instable. Des germes de $CaCO_3$ apparaissent, se développent et séquestrent partiellement les particules résiduelles de $Ca(OH)_2$ solide, sont la dissolution est entravée. Ces germes sont chargés positivement car, en leur voisinage, l'eau est sursaturée en $CaCO_3$. Les particules les plus légères peuvent être maintenues en suspension par les forces électrostatiques, tandis que les particules les moins légères sont éventuellement susceptibles de se déposer ;

– cependant, l'évolution se poursuit. D'une part, l'émission des ions $Ca^{2+}$ à partir des particules de $Ca(OH)_2$ solide n'est pas stoppée par les précipités de $CaCO_3$ formés sur elles. D'autre part, la phase aqueuse tend à devenir homogène et $CaCO_3$ solide à se dissoudre au contact d'une eau redevenue localement agressive ;

– lorsque l'évolution est achevée, après un temps théoriquement infini, on doit observer d'une part que les particules de $Ca(OH)_2$ solide sont entièrement dissoutes, d'autre part que l'eau, redevenue partout agressive vis-à-vis de $CaCO_3$ solide, présente le composition définie par le point $M_2$ et qu'aucun depôt de $CaCO_3$ solide n'est plus présent.

<u>2ème cas</u> : les particules de $Ca(OH)_2$ solide sont introduites dans l'eau à une dose définie par le segment $M_1M_2$, le point $M_2$ appartenant au domaine des eaux incrustantes (figure 10).

Comme précedemment, dès l'introduction de la chaux dans l'eau considérée, des précipités de $CaCO_3$ se forment autour des particules de $Ca(OH)_2$ solide et sont susceptibles de les séquestrer partiellement. Mais, contrairement au cas précédent, des précipités ne sont pas susceptiblement de se dissoudre intégralement. Lorsque l'évolution est achevée, après un temps théoriquement infini, on doit observer :

– que les particules de $Ca(OH)_2$ solide sont entièrement dissoutes,

– mais que l'eau, figurée en $M_3$ sur la courbe C, est en présence de $CaCO_3$ solide.

L'évolution de l'eau résultant de l'addition de $Ca(OH)_2$ solide est schématisée par un déplacement horizontal $M_1M_2$ figurant la dissolution de $Ca(OH)_2$ solide, et par un déplacement $M_2M_3$ sur une droite de pente 1, correspondant à la précipitation de $CaCO_3$.

<u>3ème cas</u> : les particules de $Ca(OH)_2$ solide sont introduites dans l'eau à une dose définie par le segment $M_1M_2$, le point $M_2$ appartenant au domaine des eaux instables (figure 11).

Ce cas ressemble beaucoup au cas précédents. Cependant, lorsque l'évolution est achevée, et si l'addition de $Ca(OH)_2$ est suffisante, le point $M_3$ figuratif de l'eau est situé sur la branche descendante de le courbe C, qui est pratiquement confondue avec l'axe des abscisses. Autrement dit, l'eau obtenue est décarbonatée (cas de la figure 11).

Pour traiter l'eau, on pourrait d'abord envisager d'introduire directement une suspension aqueuse de particules de $Ca(OH)_2$ solide à l'amont du réseau, au moyen du dispositif schématisé sur la figure 12.

Le débit d'eau dans la canalisation 1 serait égal à Q. Le débit d'eau dans la dérivation 2 où on ajouterait la chaux $Ca(OH)_2$ serait égal à q.

Soit $M_1$ le point figuratif de l'eau agressive vis-à-vis de $CaCO_3$ solide, dont on dispose (figure 13). Les particules de $Ca(OH)_2$ solide seraient introduites dans cette eau à une dose définie par le segment $M_1$,$M_2$, le point $M_2$ étant situé dans le domaine des eaux incrustantes, c'est-à-dire à droite de la courbe d'équilibre calcocarbonique (courbe C) et à gauche de la courbe de précipitation spontanée de $CaCO_3$ (courbe C′).

Un tel procédé de traitement, qui a été étudié dans le 2ème cas ci-dessus, pourrait permettre d'obtenir une eau dont le point figuratif $M_3$ serait situé à droite de la branche ascendante de la courbe d'équilibre calcocabonique et peut-être assez proche de cette courbe (figure 13). Mais les inconvénientes seraient nombreux :

– les particules mixtes composées de $Ca(OH)_2$ solide (résiduel) et de $CaCO_3$ solide (précipité), qui seraient en suspension dans l'eau transportée, risqueraient de conférer à l'eau distribuée une turbidité excessive :

– les dépôts de même composition que les particules en suspension, qui se formeraient au voisinage des génératrices inférieures des canalisations, risqueraient de réduire excessivement la section de ces ouvrages, de provoquer la corrosion de leurs parois, d'entraîner des fermentations et en conséquence d'altérer le goût de l'eau distribuée ;

– enfin, l'eau transportée ne pourrait pas répondre à une composition bien définie de sorte que la formation d'un dépôt protecteur serait de toute manière loin d'être assurée.

Cependant, sous réserve que le coagulant utilisé ne soit pas un sel d'aluminium, il est possible d'introduire $Ca(OH)_2$ sous forme solide en tête d'une installation de clarification comprenant successivement floculation, éventuellement décantation, puis filtration En effet, l'eau séjourne suffisamment longtemps dans une telle installation pour que $Ca(OH)_2$ solide puisse s'y dissoudre à peu près complètement. L'eau issue de l'installation de clarification peut donc présenter la concentration souhaitable en ions $Ca^{2+}$.

On va maintenant décrire, en référence aux figures 14 et 15, un saturateur de chaux du type actuel. Un tel saturateur est décrit dans "Mémento Degremont" 8ème édition (1978) pages 553, 554, 555.

Supposons que l'eau dont on dispose soit agressive vis-à-vis de $CaCO_3$ solide, sans devoir subir un traitement de clarification tel que celui mentionné ci-dessus. Si l'on souhaite la rendre incrustante par addition de chaux, on est conduit à y introduire, à l'amont du réseau, non pas des particules de $Ca(OH)_2$ solide, mais une solution, dite eau de chaux, répondant aux caractéristiques suivantes :

– absence des éléments carboniques ($CO_2$ libre, $HCO_3$-, $CO_3^{-2}$) et par conséquent valeur nulle du $CO_2$ total ;

– teneur en ions $Ca^{2+}$ aussi élevée que possible, celle-ci étant limitée par la solubilité de $Ca(OH)_2$.

Un tel réactif est couramment obtenu en ajoutant $Ca(OH)_2$ solide dans un saturateur dans lequel passe de l'eau prélevée sur l'eau dont on dispose, selon le schéma de la figure 14. L'eau ainsi prélevée séjourne environ une heure dans le saturateur S au contact des particules de $Ca(OH)_2$ solide (voir figure 15). Un tel séjour favorise la dissolution de ces particules, qui est entravée, on le rappelle, par les dépôts de $CaCO_3$ formés autour.

L'évolution de l'eau dans le saturateur est semblable à celle étudiée dans le 3ème cas ci-dessus. Elle est représentée sur la figure 16 :

– le point figuratif de l'eau à l'entrée dans le saturateur est le point $M_1$, qui est aussi le point figuratif de l'eau agressive vis-à-vis de $CaCO_3$ solide, dont on dispose;

– le point figuratif de l'eau à la sortie du saturateur est un point tel que $M_3$, situé sur la branche de la courbe d'équilibre calcocarbonique (courbe C), qui est pratiquement confondue avec l'axe des abscisses. Le point $M_3$ est à gauche de la courbe de saturation en $Ca(OH)_2$ (courbe C″) ;

– l'évolution de l'eau dans le saturateur est schématisée par un déplacement horizontal $M_1M_2$ figurant la dissolution de $Ca(OH)_2$, et par un déplacement $M_2M_3$ sur une droite de pente 1 correspondant à la précipitation de $CaCO_3$. En fait, ces deux déplacements sont simultanés, de sorte que le point figuratif de l'eau dans la saturateur décrit une courbe telle que $\gamma$ .

L'eau introduite dans le réseau est représentée en $M_4$, légèrement à droite de la courbe d'équilibre calcocarbonique (courbe C). Le point $M_4$ est le barycentre du point $M_1$ (masse Q - q) et du point $M_3$ (masse q), où Q et q représentent respectivement le débit introduit dans le réseau et le débit traversant le saturateur.

Les inconvénientes présentés par l'utilisation d'un saturateur de chaux du type précité sont les suivants :

On observe tout d'abord une dissolution incomplète de $Ca(OH)_2$ solide. Les dépôts qui sont extraits du saturateur de chaux S contiennent principalement $CaCO_3$ solide. Mais ils contiennent aussi des particules résiduelles de $Ca(OH)_2$ solide. Bien que l'eau séjourne de l'ordre d'une heure dans le saturateur S, la dissolution de ces particules est loin d'être complète. La vitesse de dissolution de $Ca(OH)_2$ solide diminue en effet de plus en plus à mesure que la concentration de l'eau en $Ca(OH)_2$ dissous augmente et se rapproche du taux de saturation. On s'explique aussi que le rendement de la dissolution de $Ca(OH)_2$ solide soit bien meilleur dans le cas cité précédemment, où les particules de $Ca(OH)_2$ solide sont introduites en tête d'une installation de clarification, car l'eau est alors très loin d'être saturée en $Ca(OH)_2$.

On observe également un rendement variable de dissolution.

La présence des particules résiduelles de $Ca(OH)_2$ solide dans les dépôts extraits du saturateur de chaux S n'empêcherait pas l'eau traitée de répondre en permanence à des caractéristiques définies si le débit d'eau introduit dans le réseau était constant. Mais ce débit varie au cours de la journée. On est donc conduit à faire varier parallélement le débit de chaux à introduire dans l'eau du réseau 1. A cet effet, il convient de modifier le débit de la solution qui traverse le saturateur S.

Mais la modification du débit de la solution traversant le saturateur S entraîne une variation du temps de contact entre les particules de $Ca(OH)_2$ solide et la phase liquide, donc une variation de la concentration en ions $Ca^{2+}$ de la solution issue du saturateur S, cette variation allant à l'encontre du but recherché. Il n'y a donc pas de proportionnalité entre le débit de chaux à introduire dans l'eau du réseau 1 et le débit de la solution traversant le saturateur S. En conséquence, un changement du débit de l'eau introduite dans le réseau 1 conduit à un régime transitoire rendant en pratique impossible le réglage de la teneur en ions $Ca^{2+}$ de la solution issue du saturateur S. Il en résulte que la composition de l'eau introduite dans le réseau 1 ne peut pas répondre à des caractéristiques définies et que la formation d'un dépôt protecteur sur les parois des canalisations de ce réseau risque d'être compromise.

Par ailleurs, dans l'installation précitée, le saturateur de chaux S du type actuel présente un volume important, résultant de la nécessité d'un contact prolongé entre l'eau passant dans l'appareil et les particules de $Ca(OH)_2$ solide. Ce volume est calculé selon l'exemple numérique ci-après.

Dans cet exemple, on se propose de montrer comment, à partir de la composition de l'eau dont on dispose ainsi que du débit Q introduit dans le réseau 1, on peut déterminer la composition de l'eau introduite dans le réseau, le débit q introduit dans le saturateur S, le volume du saturateur et la consommation de chaux.

A cet effet, on applique la méthode développée dans l'ouvrage "les équilibres carboniques et l'équilibre calcocarbonique dans les eaux naturelles, Eyrolles 1981".

La composition de l'eau dont on dispose est la suivante :

Balance cations - anions (en milliéquivalents par litre)

| | | | |
|---|---|---|---|
| $[Ca^{2+}]$ | = 4,86 | $[HCO_3^-]$ | = 3,30 |
| $[Mg^{2+}]$ | = 0,34 | $[SO_4^{2-}]$ | = 1,30 |
| $[Na^+]$ | = 0,35 | $[Cl^-]$ | = 0,79 |
| $[K^+]$ | = 0,08 | $[NO_3^-]$ | = 0,24 |
| total | = 5,63 | total | = 5,63 |

pH = 6,56

température = 16,2°C

Il en résulte :

$[CO_3^{2-}]$ : négligeable

$[H_2CO_3^*] = 2,00$

$CO_2$ total = $[H_2CO_3^*] + [HCO_3^-] + [CO_3^{2-}]$

$CO_2$ total = 5,30

La figure 16, mentionnée précédemment, correspond précisément à l'exemple ci-dessus. On rappelle que les éléments portés sur cette figure 16 sont les suivants :

$M_1$, point figuratif de l'eau dont on dispose et en même temps point figuratif de l'eau introduite dans le saturateur S,

C, courbe d'équilibre calcocarbonique

C', courbe de précipitation spontanée de $CaCO_3$

C", courbe de saturation en $Ca(OH)_2$

$M_3$, point figuratif de la solution à la sortie du saturateur (pour fixer les idées, le taux de saturation en $Ca(OH)_2$ de cette solution a été pris égal à 75%

$M_1M_2$, déplacement schématisant la dissolution de $Ca(OH)_2$ solide

$M_2M_3$, déplacement schématisant la précipitation de $CaCO_3$

$M_4$, point figuratif de l'eau introduite dans le réseau (cette eau est le mélange de la solution issue du saturateur, figurée en $M_3$, et de l'eau n'ayant pas traversé le saturateur, figurée en $M_1$).

La composition (figurée en $M_4$) de l'eau introduite dans le réseau 1 est la suivante :

Balance cations - anions (en milliéquivalents par litre)

| | | | |
|---|---|---|---|
| $[Ca^{2+}]$ | = 6,24 | $[HCO_3^-]$ | = 4,67 |
| $[Mg^{2+}]$ | = 0,34 | $[SO_4^{2-}]$ | = 1,30 |
| $[Na^+]$ | = 0,35 | $[Cl^-]$ | = 0,79 |
| $[K^+]$ | = 0,08 | $[NO_3^-]$ | = 0,24 |
| total | = 7,01 | total | = 7,00 |

pH = 7,47

température = 16,2°C

Il en résulte :

$[CO_3^{2-}]$ : négligeable

$[H_2CO_3^*] = 0,34$

$CO_2$ total = 5,01

En fait, la composition de l'eau introduite dans le réseau 1 varie selon le taux de saturation en $Ca(OH)_2$ de la solution issue du saturateur. Ce taux est lui-même variable comme il a été indiqué ci-dessus.

Le débit q introduit dans le saturateur S est calculé comme suit :

Soit Q le débit introduit dans le réseau 1 et q le débit introduit dans le saturateur S.

Le point $M_4$ est le barycentre du point $M_1$ (masse Q - q) et du point $M_3$ (masse q) :

$$(Q - q)\ M_4M_1 = q\ M_4M_3$$

Il en résulte, dans l'exemple considéré :

q = 0,055 Q

Supposons une consommation journalière de 10 000 $m^3$ d'eau.

Il en résulte :

q = 550 $m^3$ par jour.

On peut maintenant déterminer le volume (V) que doit présenter le saturateur S pour que la durée du contact entre la phase liquide et les particules de $Ca(OH)_2$ solide soit d'une heure :

V = 550/24 $m^3$

V = 23 $m^3$

En première approximation, la consommation de chaux est la somme :

– du calcium ajouté à l'eau introduite dans le réseau du fait du traitement :

$$Q\ ([Ca^{2+}]_{M4} - [Ca^{2+}]_{M1})$$

soit

10 000 $m^3$/jour x (3,12 - 2,43) moles/$m^3$

6 900 moles/jour

510 kg/jour de $Ca(OH)_2$

– et du calcium précipité sous forme de $CaCO_3$ dans le saturateur :

q x $CO_2$ total $M_1$

soit :

550 $m^3$/jour x 5,30 moles/$m^3$

2 915 moles/jour

216 kg/jour de $Ca(OH)_2$

La consommation journalière de chaux calculée est donc de 0,73 tonne. Mais la consommation réelle est plus importante, compte tenu des particules résiduelles de $Ca(OH)_2$ solide non dissoutes.

On va maintenant décrire, en réference aux figures 17 et 18, l'installation pour la mise en oeuvre du procédé selon l'invention.

Cette installation comprend principalement un réservoir R de stockage de chaux en poudre, un circuit de dérivation 2 pour prélever l'eau d'une canalisation 1 et un saturateur S de chaux placé sur ce circuit de dérivation 2.

Sous le réservoir R est disposé un doseur à vis 3 horizontal qui déverse la poudre de chaux dans un entonnoir 4 qui communique avec une conduite 5 reliée à la sortie d'un décarbonateur D et à l'entrée du saturateur S.

Le circuit de dérivation 2 comporte en amont du saturateur S, relativement au sens de la circulation de l'eau, un décarbonateur D alimenté par l'eau à traiter. La conduite 6 qui relie la sortie du saturateur S à la canalisation 1 comprend une dérivation 7 pour recycler vers le décarbonateur D une partie de la solution sortant du saturateur S.

La conduite 2 de prélèvement de l'eau de la canalisation et la dérivation de recyclage 7 issue du saturateur S débouchent dans le décarbonateur D à la partie inférieure de celui-ci, au moyen d'un diffuseur 8.

La partie inférieure du décarbonateur D comprend une tubulure 9 d'évacuation du $CaCO_3$ précipité.

De plus, la dérivation de recyclage 7 issue du saturateur S comprend une pompe 10 et une vanne 11 de réglage de débit.

Par ailleurs, le saturateur S est muni d'un agitateur 12 et de plaques de tranquillisation 13.

On va maintenant décrire le fonctionnement de l'installation et la mise en oeuvre du procédé selon l'invention.

L'eau introduite dans l'installation est d'abord mélangée dans un décarbonateur D à une solution issue du saturateur S. Cette solution, dépourvue des éléments carboniques, présente une teneur constante en $Ca(OH)_2$, par exemple 75% de la concentration correspondant à la saturation. Elle est représentée sur la figure 19 en un point tel que $M_4$, situé à gauche de la courbe de saturation en $Ca(OH)_2$ (courbe C") et appartenant à la branche de la courbe d'équilibre calcocarbonique (courbe C), qui est pratiquement confondue avec l'axe des abscisses.

L'évolution du point figuratif de l'eau dans le décarbonateur (D) est la suivante :

– avant d'être mélangée à la solution issue du saturateur S, l'eau est représentée par le point $M_1$, qui est aussi le point figuratif de l'eau agressive vis-à-vis de $CaCO_3$ solide, dont on dispose ;

– le point figuratif de l'eau provenant du mélange est le barycentre $M_2$ du point $M_1$ (masse q) et du point $M_4$ (masse r), où q et r représentent respectivement le débit introduit dans l'installation et le débit de recyclage issu du saturateur S ;

– du fait de la précipitation spontanée de $CaCO_3$, le point figuratif de l'eau dans le décarbonateur D passe de $M_2$ en $M_3$, à l'intersection de la demi-droite de pente 1, issue de $M_2$, et de la branche de la courbe d'équilibre calcocarbonique C, qui est pratiquement confondue avec l'axe des abscisses.

L'eau issue du décarbonateur D est mélangée à $Ca(OH)_2$ solide à l'amont du saturateur S. Aucun précipité de $CaCO_3$ ne peut se former dans le saturateur. La dissolution de la phase solide, qui est accélérée grâce à un agitateur, conduit très rapidement à la formation d'une solution de concentration déterminée en $Ca(OH)_2$. Le point figuratif de l'eau passe de $M_3$ en $M_4$.

L'eau introduite dans la canalisation 1 du réseau à l'aval du traitement est représentée en $M_5$, légèrement à droite de la courbe d'équilibre calcocarbonique (courbe C). Le point $M_5$ est le barycentre du point $M_1$ (masse Q - q) et du point $M_4$ (masse q), où Q et q représentent respectivement le débit introduit dans la canalisation 1 du réseau et le débit traversant l'installation.

Le débit de recyclage r doit répondre aux deux conditions ci-après :

– être suffisamment élevé pour que l'eau issue du décarbonateur D soit presque complètement décarbonatée, et donc représentée sur la branche de la courbe d'équilibre calcocarbonique (courbe C), qui est pratiquement confondue avec l'axe des abscisses. A cet effet, le point $M_2$ doit être situé à droite du point I commun à la droite $M_1M_4$ et à la demi-droite de pente 1, issue du point S d'abscisse $\lambda$ si $\lambda$ est positif ou issue du point O, origine des axes de coordonnées, si $\lambda$ est négatif ;

– ne pas être trop élevé afin de minimiser la dépense d'énergie. A cet effet, le point $M_2$ ne doit pas être trop éloigné du point I.

A la mise en service de l'installation, il peut être le cas échéant avantageux d'introduire $Ca(OH)_2$ solide dans le décarbonateur D afin que l'eau issue de ce dernier soit immédiatement décarbonatée.

Les avantages de l'installation conforme à l'invention sont les suivants :

Cette installation permet une dissolution complète de $Ca(OH)_2$ solide. Les dépôts qui sont extraits du décarbonateur D contiennent seulement du carbonate de calcium. La chaux mise en oeuvre est en effet complètement dissoute dans le saturateur S. Le rendement de l'installation est donc meilleur que celui du saturateur de chaux actuel. La seule fraction de chaux qui est perdue correspond au carbonate de calcium précipité. Une telle perte est inévitable.

Cependant, le principal avantage de l'installation est que la solution qui en est issue peut répondre à une composition définie malgré les variations journalières du débit de l'eau introduite dans le réseau. Il suffit en effet de faire varier proportionnellement le débit q traversant l'installation. Il en résulte que l'eau introduite dans

le réseau peut également répondre à une composition définie et que la formation d'un dépôt protecteur de $CaCO_3$ solide sur les parois intérieures des canalisations est possible.

De plus, l'installation présente un volume réduit. En effet, le volume du décarbonateur D et celui du saturateur S sont l'un et l'autre beaucoup plus faibles que le volume du saturateur du type actuel. Le temps de séjour de l'eau est seulement de l'ordre de 10 minutes dans chaque compartiment de la nouvelle installation alors qu'il est de l'ordre d'une heure dans l'appareil actuel. La capacité de stockage est donc réduite d'environ deux tiers.

Application numérique

Sur le même exemple que celui proposé précédemment dans l'étude du saturateur de chaux du type actuel, on montre ci-après comment, avec l'installation selon l'invention, on peut déterminer la composition de l'eau introduite dans le réseau, le débit introduit dans l'installation, le volume de chacun de ses deux compartiments, le débit de recyclage et la consommation de chaux.

On suppose donc que l'eau dont on dispose présente la même composition que celle indiquée dans l'exemple précédent.

La figure 19, mentionnée précédemment, correspond précisément à l'exmple choisi. On rappelle que les éléments portés sur cette figure sont les suivants :

$M_1$, point figuratif de l'eau dont on dispose et en même temps point figuratif de l'eau introduite dans l'installation

C, courbe d'équilibre calcocarbonique

C′, courbe de précipitation spontanée de $CaCO_3$

C″, courbe de saturation en $Ca(OH)_2$

$M_4$, point figuratif de la solution à la sortie du saturateur (pour fixer les idées, le taux de saturation en $Ca(OH)_2$ de cette solution a été pris égal à 75%).

$M_2$, point figuratif de l'eau provenat du mélange, effectué dans le décarbonateur, de l'eau introduite dans l'installation et de la solution issue du saturateur

$M_2M_3$, déplacement schématisant la précipitation de $CaCO_3$

$M_5$, point figuratif de l'eau introduite dans le réseau (cette eau est le mélange de la solution issue du saturateur, figurée en $M_4$, et de l'eau n'ayant pas traversé l'installation, figurée en $M_1$.

La composition de l'eau introduite dans le réseau (figurée en $M_5$) est la même que celle calculée précédemment, qui correspond au cas du saturateur de chaux du type actuel. Mais dans le cas de l'installation selon l'invention, et contrairement au cas du saturateur actuel, cette composition est stable.

Comme précédemment, on désigne par Q le débit introduit dans le réseau et par q le débit introduit dans l'installation.

Le point $M_5$ est le barycentre du point $M_1$ (masse Q-q) et du point $M_4$ (masse q) :

$$(Q - q)M_5M_1 = q\ M_5M_4$$

Il en résulte, dans l'exemple considéré :

$$q = 0{,}055\ Q$$

La consommation journalière étant de 10 000 $m^3$ d'eau, on obtient :

$$q = 550\ m^3 \text{ par jour}$$

Le temps de séjour de l'eau est de l'ordre de 10 minutes dans le décarbonateur D comme dans le saturateur S.

Il en résulte un volume d'environ 4 $m^3$ pour chacun des deux compartiments de l'installation.

Le débit de recyclage r doit être légèrement supérieur à la valeur pour laquelle l'eau issue du décarbonateur serait figurée au sommet P de la courbe d'équilibre calcocarbonique (courbe C).

Pour déterminer ce débit minimal, on écrira que l'eau résultant du mélange de l'eau introduite dans l'installation, figurée en $M_1$, et de la solution issue du saturateur S, figurée en $M_4$, est représentée en I, sur la droite de pente 1 issue du point S :

$$q \times IM_1 = r \times IM_4$$

Il en résulte :

$$r = 85\ m^3 \text{ par jour.}$$

Le calcul effectué selon la méthode indiquée précédemment conduit à la même consommation journalière de chaux que dans le cas du saturateur du type actuel, soit 0,73 tonne. Mais dans le cas de l'installation selon l'invention, la consommation calculée correspond beaucoup mieux à la consommation réelle puisque les particules de $Ca(OH)_2$ solide introduites dans l'installation sont entièrement dissoutes.

**Revendications**

1. Procédé pour protéger contre la corrosion les parois intérieures en métaux ferreux ou à base de ciment des canalisations d'eau, dans lequel on prélève en continu de l'eau à la canalisation (1), eau que l'on fait passer dans un saturateur (S) à l'amont duquel on ajoute de la chaux solide, après quoi l'eau est réintroduite dans la canalisation (1), la quantité de chaux ajoutée à l'eau de la canalisation étant telle que le point figuratif ($M_5$) de l'eau, dans un diagramme où la concentration en $CO_2$ total est en ordonnées et la concentration en $Ca^{2+}$ est en abscisses, est situé dans une zone (A) comprise entre la courbe d'équilibre calcocarbonique (C) et la courbe de précipitation spontanée de $CaCO_3$ (C′) et au-dessus de la demi-droite (SX) de pente égale à 2, S étant situé sur l'axe des abscisses et son abscisse étant fonction de la concentration en ions $SO_4^{2-}$, $Cl^-$, $NO_3^-$,$Mg^{2+}$, $Na^+$ et $K^+$, caractérisé en ce qu'avant d'être introduite dans le saturateur (S), l'eau prélevée est mélangée dans un décarbonateur (D) à une solution dépourvue de $CO_2$ total et chargée de chaux provenant du saturateur, le débit de la solution allant du saturateur au décarbonateur étant suffisamment élevé pour permettre l'élimination quasi-complète du $CO_2$ total dans le décarbonateur par précipitation de $CaCO_3$.

2. Procédé conforme à la revendication 1, caractérisé en ce que le point ($M_2$), qui figure à l'entrée du décarbonateur (D) le mélange de l'eau issue de la canalisation (1) avant traitement et de l'eau issue du saturateur (S), est situé sur une droite $M_1M_4$, $M_1$ étant le point figuratif de l'eau de la canalisation (1) avant traitement et $M_4$ étant le point figuratif de la solution issue du saturateur, ledit point ($M_2$) étant situé légèrement à droite du point (I) commun à la droite ($M_1M_4$) et à la demi-droite de pente égale à 1, issue du point (S) situé sur l'axe des abscisses et d'abscisse $\lambda$ si $\lambda$ est positif, ou issue du point (O), origine des axes de coordonnées, si $\lambda$ est négatif.

3. Procédé conforme à l'une des revendications 1 ou 2, caractérisé en ce qu'au départ de la mise en oeuvre du procédé, on introduit de la chaux solide directement dans le décarbonateur (D).

4. Installation pour la mise en oeuvre du procédé selon l'une des revendications 1 à 3, comprenant un réservoir (R) de stockage de chaux en poudre, un circuit de dérivation (2) pour prélever l'eau d'une canalisation (1), un saturateur (S) de chaux placé sur ce circuit de dérivation (2), des moyens (3, 4, 5) pour introduire la chaux en poudre dans le saturateur (S), caractérisée en ce que le circuit de dérivation (2) comporte en amont du saturateur (S), relativement au sens de la circulation de l'eau, un décarbonateur (D) alimenté par l'eau à traiter, en ce que la conduite (6) qui relie la sortie du saturateur (S) à la canalisation (1) comprend une dérivation (7) pour recycler vers le décarbonateur (D) une partie de la solution sortant du saturateur (S), et en ce que la chaux en poudre est introduite dans la conduite (5) qui relie la sortie du décarbonateur (D) à l'entrée du saturateur (S).

5. Installation conforme à la revendication 4, caractérisée en ce que la conduite (2) de prélèvement de l'eau de la canalisation (1) et la dérivation de recyclage (7) issue du saturateur (S) débouchent dans le décarbonateur (D) à la partie inférieure de celui-ci, au moyen d'un diffuseur (8).

6. Installation conforme à la revendication 5, caractérisée en ce que la partie inférieure du décarbonateur (D) comprend une tubulure (9) d'évacuation du $CaCO_3$ précipité.

7. Installation conforme à l'une des revendications 4 à 6, caractérisée en ce que la dérivation de recyclage (7) issue du saturateur (S) comprend une pompe (10) et une vanne (11) de réglage de débit.

8. Installation conforme à l'une des revendications 4 à 7, caractérisée en ce que le saturateur (S) comprend un agitateur (12).

**Patentansprüche**

1. Verfahren zum Korrosionsschutz der Innenwände von Wasserrohrleitungen aus Eisenmetallen oder auf Zementbasis, bei dem man fortlaufend wasser aus der Rohrleitung (t) entnimmt, welches man in einen Sättiger (S) fließen läßt stromaufwärts von welchem man festen Kalk zusetzt, wonach das Wasser in die Rohrleitung (1) zurückgeführt wird, wobei die Menge des zu dem Wasser aus der Rohrleitung (1) zugegebenen Kalks so gross ist dass der das Wasser darstellende Punkt ($M_5$), in einem Diagram bei dem die Konzentration an gesamten $CO_2$ auf der Ordinate und die $Ca^{2+}$-Konzentration auf der Abszisse aufgetragen ist, in einer Zone (A) gelegen ist, die sich zwischen der Kurve des Calciumcarbonat-Gleichgewichts (C) und der Kurve des spontanen Ausfällens von $CaCO_3$ (C′) und oberhalb der Halbgeraden (SX) mit der Steigung 2 befindet, wobei S auf der Abszissenachse gelegen ist und seine Abszisse eine Funktion der Konzentration der Ionen $SO_4^{2-}$, $Cl^-$, $No_3^-$, $Mg^{2+}$, $Na^+$ und $K^+$ ist, dadurch gekennzeichnet, daß das entnommene Wasser vor dem Einbringen in den Sättiger (S) in einem Kohlensäureentferner (D) mit einer gesamter $CO_2$-freien mit Kalk beladenen Lösung vermischt wird, die aus dem Sättiger kommt, wobei die Menge der vom Sättiger zum Kohlensäureentferner fließenden Lösung ausreichend hoch ist, um die quasi-vollständige Entfernung des gesamten $CO_2$ durch Ausfällen als $CaCO_3$ im

Kohlensäureentferner zu gestatten.

2. Verfahren nach Anspruch 1, dadurch gekennzeichnet, daß der Punkt ($M_2$), der die Mischung des aus der Rohrleitung (1) stammenden unbehandelten Wassers mit Wasser aus dem Sättiger (S) am Eingang des Kohlensäureentferners (D) darstellt, auf einer Geraden $M_1M_4$ gelegen ist, wobei der Punkt $M_1$ das Wasser aus der Rohrleitung (1) vor der Behandlung und der Punkt $M_4$ die aus dem Sättiger abfließende Lösung darstellt, wobei der Punkt ($M_2$) geringfügig rechts von dem Punkt (I) gelegen ist, der der Geraden ($M_1M_4$) und der Halbgeraden mit der Steigung 1 gemeinsam ist, die vom Punkt (S) ausgeht, der auf der Abszissenachse und der Abszisse $\lambda$ gelegen ist, falls $\lambda$ positiv ist, oder die vom Punkt (0), dem Ursprung der Achsen des Koordinatensystems, ausgeht, falls $\lambda$ negativ ist.

3. Verfahren nach einem der Ansprüche 1 oder 2, dadurch gekennzeichnet, daß zu Beginn der Durchführung des Verfahrens der feste Kalk direkt in den Kohlensäureentferner (D) gegeben wird.

4. Einrichtung zur Durchführung des Verfahrens gemäß einem der Ansprüche 1 bis 3, die einen Vorratsbehälter (R) für pulverförmigen Kalk, eine Abzweigung (2) zum Entnehmen des Wassers aus einer Rohrleitung (1), einen auf der Abzweigung (2) angebrachten Kalksättiger (S) und Mittel (3, 4, 5) zum Einbringen des pulverförmigen Kalks in den Sättiger (S) umfaßt, dadurch gekennzeichnet, daß die Abzweigung (2) stromaufwärts des Sättigers (S), bezogen auf die Strömungsrichtung des Wassers, einen Kohlensäureentferner (D) aufweist, der von dem zu behandelnden Wasser gespeist wird, daß die Leitung (6), die den Ausgang des Sättigers (S) mit der Rohrleitung (1) verbindet, eine Leitung (7) zur Rückführung eines Teils der den Sättiger (S) verlassenden Lösung zum Kohlensäureentferner (D) umfaßt und daß der pulverförmige Kalk durch die Leitung (5), die den Ausgang des Kohlensäureentferners (D) mit dem Eingang des Sättigers (S) verbindet, zugegeben wird.

5. Einrichtung nach Anspruch 4, dadurch gekennzeichnet, daß die Leitung (2) zum Entnehmen des Wassers aus der Rohrleitung (1) und die vom Sättiger (S) ausgehende Rückführungsleitung (7) in den unteren Teil des Kohlensäureentferners (D) mittels eines Diffusors (8) einmünden.

6. Einrichtung nach Anspruch 5, dadurch gekennzeichnet, daß der untere Teil des Kohlensäureentferners (D) einen Stutzen (9) zum Absaugen des ausgefällenen $CaCO_3$ besitzt.

7. Einrichtung nach einem der Ansprüche 4 bis 6, dadurch gekennzeichnet, daß die Rückführungsleitung (7), die vom Sättiger (S) ausgeht, eine Pumpe (10) und ein Ventil (11) zur Regulierung des Durchflusses besitzt.

8. Einrichtung nach einem der Ansprüche 4 bis 7, dadurch gekennzeichnet, daß der Sättiger (S) einen Rührer (12) umfaßt.

## Claims

1. Process for protecting the internal walls of water pipeworks, made from ferrous metals or based on cement, from corrosion in which water from the pipework (1) is continuously bled, this water being fed into a saturator (S) upstream of which solid lime is added, after which the water is fed back into the pipework (1), the quantity of lime added to the pipework water being such that the point on the graph ($M_5$) for the water, in a diagram in which the concentration of total $CO_2$ is the ordinate and the concentration of $Ca^{2+}$ is the abscissa, is located in a zone (A) encompassed between the curve of calcium/carbonate equilibrium (C) and the curve of spontaneous precipitation of $CaCO_3$ (C′) and above the semi-straight line (SX) of slope equal to 2, S being located on the axis of the abscissae and its abscissa being dependent on the concentration of $SO_42-$, $Cl^-$, $NO_3-$, $Mg^{2+}$, $Na^+$ and $K^+$ ions, characterized in that before being added to the saturator (S), the bled water is mixed in a decarbonator (D) with a solution which is lean in total $CO_2$ and loaded with lime originating from the saturator, the output of the solution going from the saturator to the decarbonator being high enough to allow the virtually complete elimination of total $CO_2$ in the decarbonator by precipitation of $CaCO_3$.

2. Process according to Claim 1, characterized in that the point ($M_2$), which plots the mixture of the water coming from the pipework (1) before treatment and the water coming from the saturator (S) at the inlet to the decarbonator (D), is located on a straight line $M_1M_4$, $M_1$ being the point on the graph for the water from the pipework (1) before treatment and $M_4$ being the point on the graph for the solution coming from the saturator, the said point ($M_2$) being located slightly to the right of the point (I) common to the straight line ($M_1M_4$) and to the semi-straight line of slope equal to 1, originating from the point (S) located on the axis of the abscissae and of the abscissa $\lambda$ if $\lambda$ is positive, or originating from the point (O), the origin of the coordinate axes, if $\lambda$ is negative.

3. Process according to one of Claims 1 or 2, characterized in that initially, when using the process, solid lime is added directly into the decarbonator (D).

4. Plant for using the process according to one of Claims 1 to 3, comprising a storage tank (R) for powdered lime, a loop (2) for bleeding the water from a pipework (1), a lime saturator (S) located on the loop (2), means (3, 4, 5) for adding the powdered lime into the saturator (S), characterized in that the loop (2) comprises, upstream of the saturator (S), relative to the direction of water flow, a decarbonator (D) fed with water which

is to be treated, in that the pipe (6) which connects the outlet of the saturator (S) with the pipework (1) comprises a loop (7) for recycling a part of the solution coming out of the saturator (S) to the decarbonator (D), and in that the powdered lime is added to the pipe (5) which connects the outlet of the decarbonator (D) to the inlet of the saturator (S).

5. Plant according to Claim 4, characterized in that the pipe (2) for bleeding the water from the pipework (1) and the recycling loop (7) coming out of the saturator (S) discharge into the decarbonator (D) in its lower part, by means of a diffuser (8).

6. Plant according to Claim 5, characterized in that the lower part of the decarbonator (D) comprises a branch line (9) for removing precipitated $CaCO_3$.

7. Plant according to one of Claims 4 to 6, characterized in that the recycling loop (7) coming out of the saturator (S) comprises a pump (10) and an output control valve (11).

8. Plant according to one of Claims 4 to 7, characterized in that the saturator (S) comprises a stirrer (12).

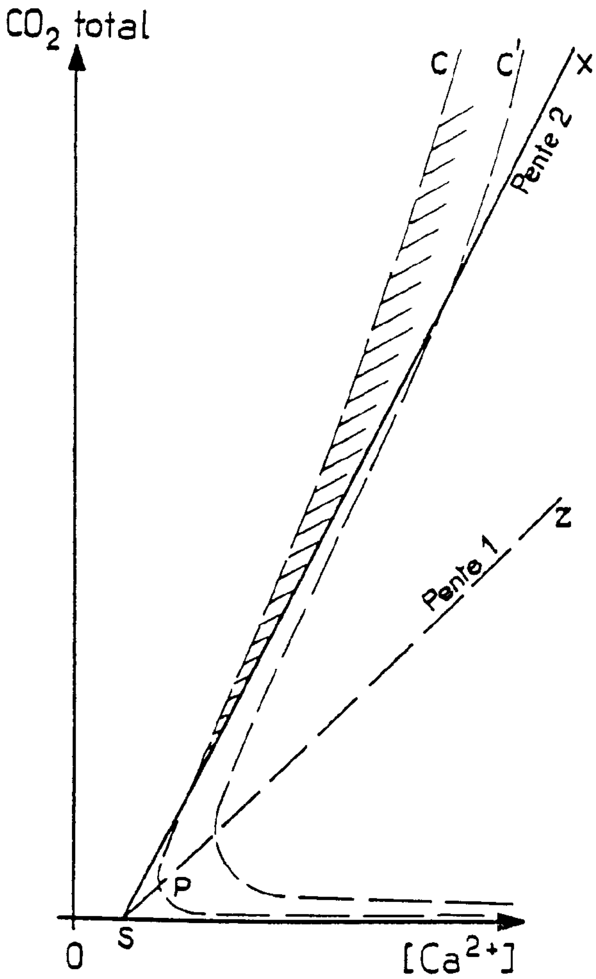

$CO_2$ total
C
C'
X
Pente 2
Z
Pente 1
P
0
S
[$Ca^{2+}$]


FIG_1

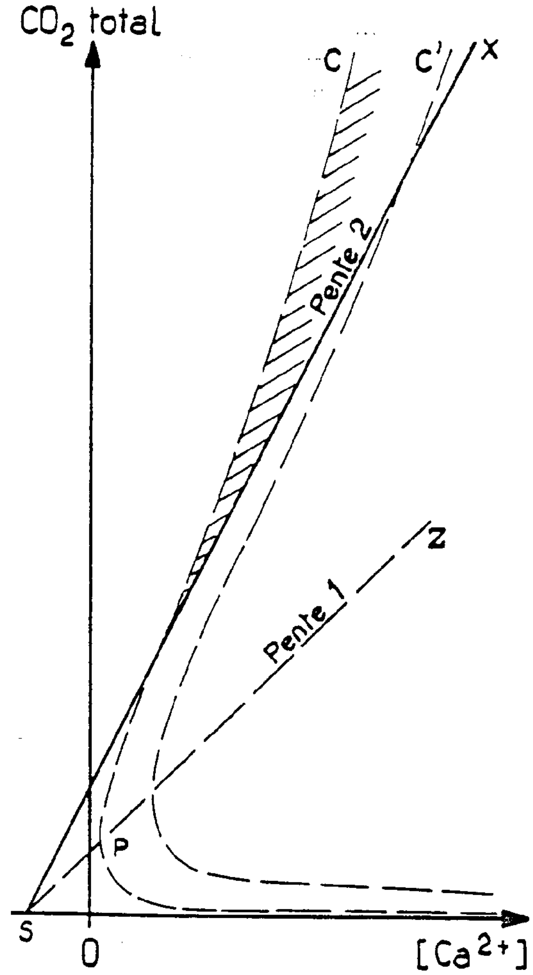

$CO_2$ total
C
C'
X
Pente 2
Z
Pente 1
P
S
0
[$Ca^{2+}$]


FIG_2

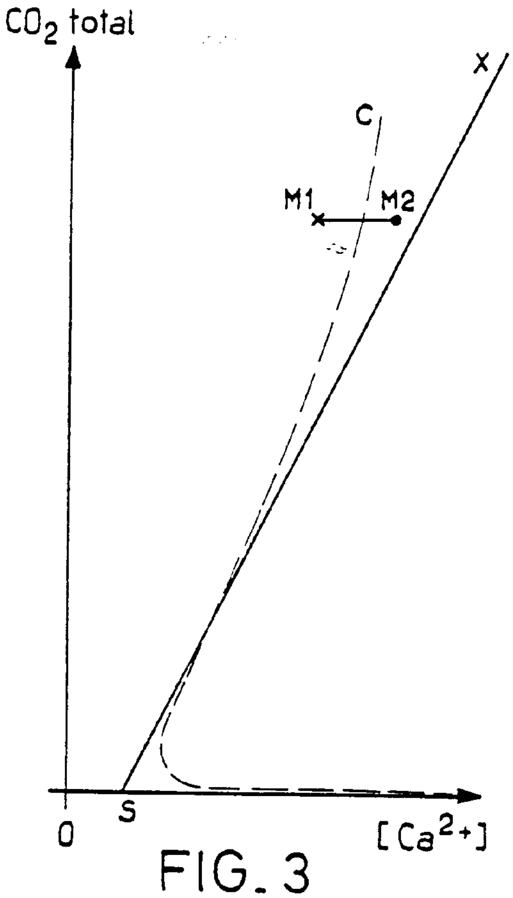


FIG_3

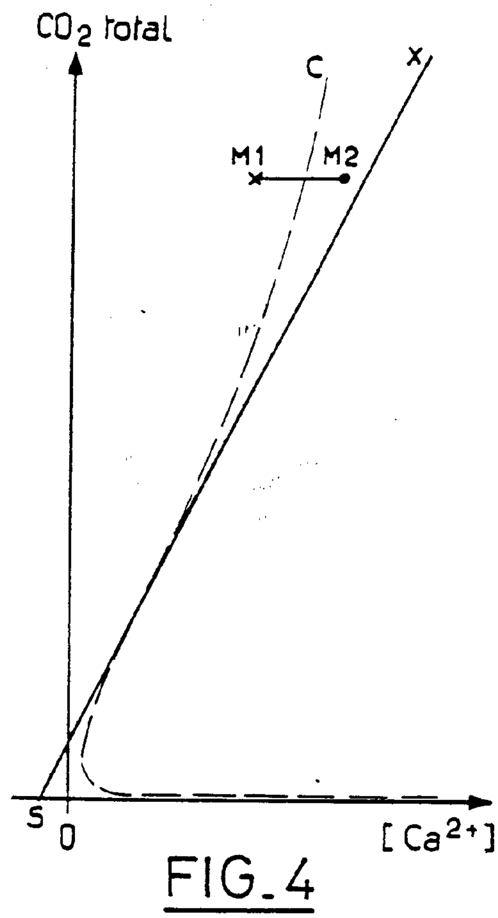


FIG_4

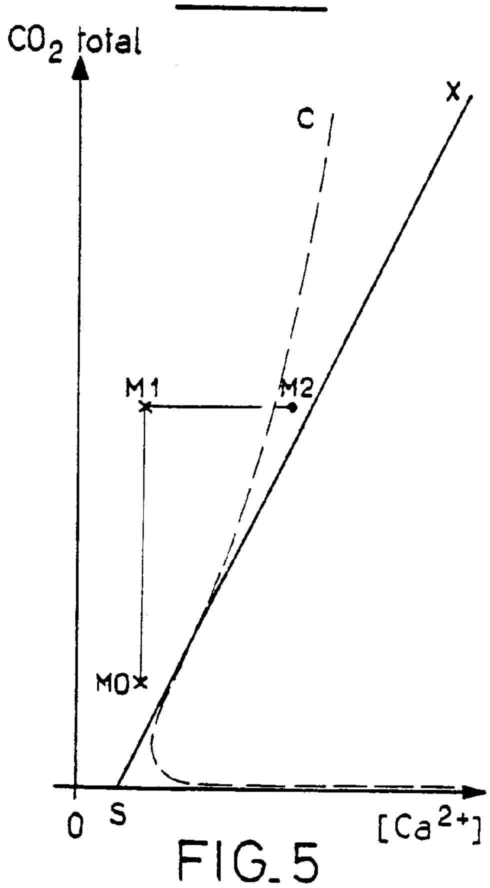


FIG_5

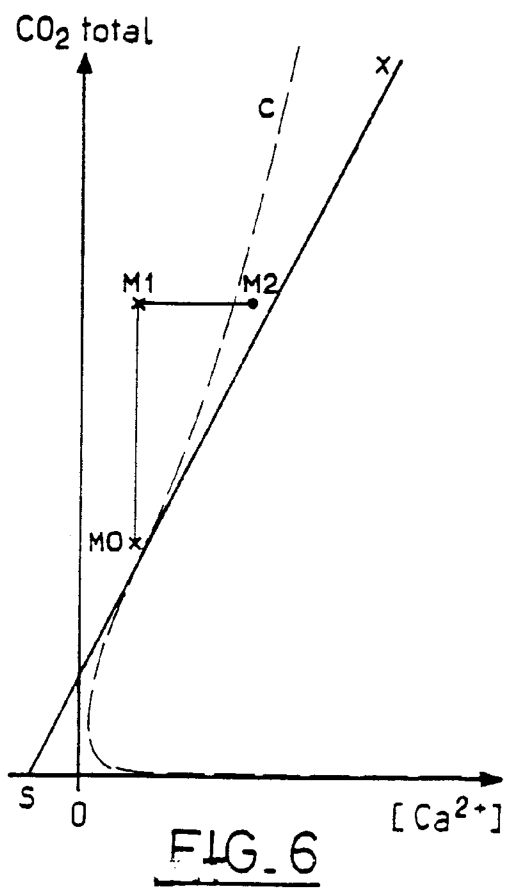


FIG_6

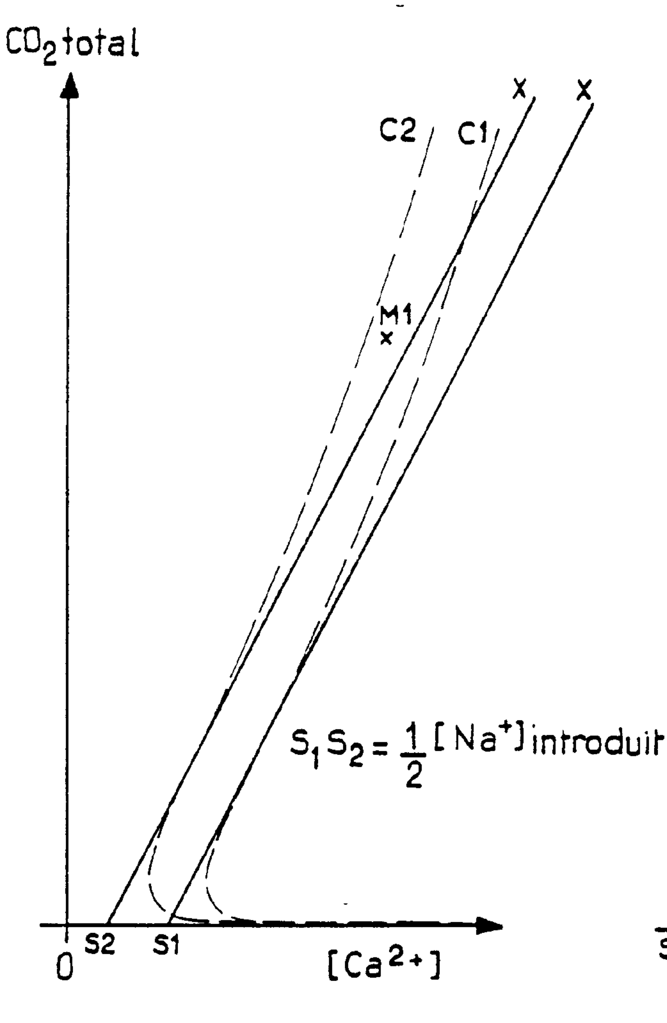
CO2 total
C2
C1
x
x
M1
S1 S2 = 1/2 [Na+] introduit
0
S2
S1
[Ca2+]

FIG_7

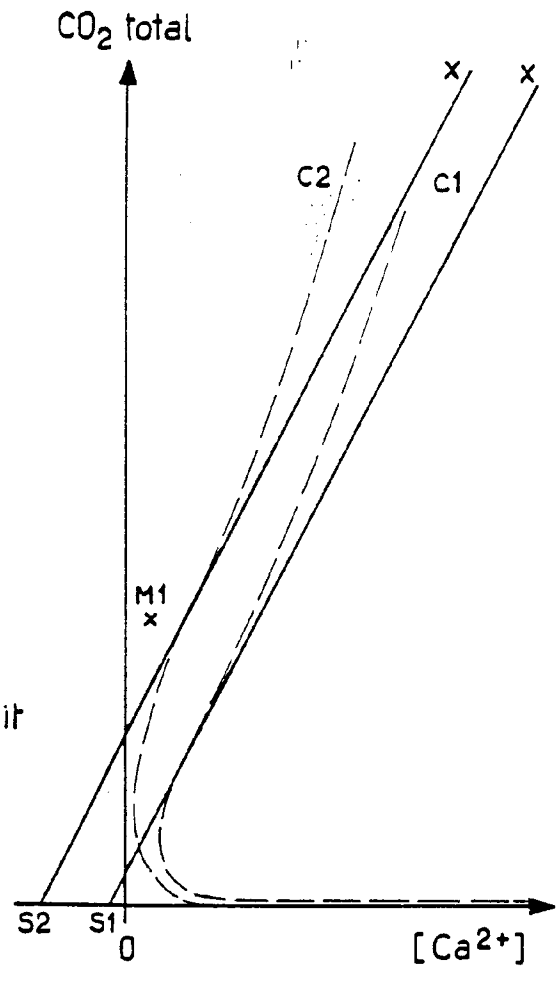
CO2 total
C2
C1
x
x
M1
S2
S1
0
[Ca2+]

FIG_8

FIG_9

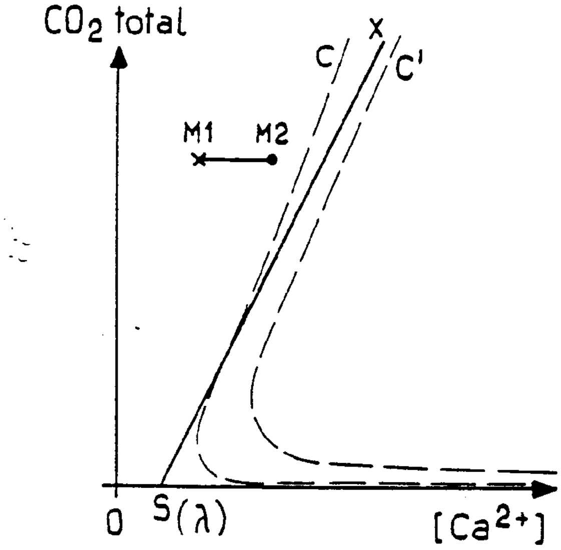


FIG_10

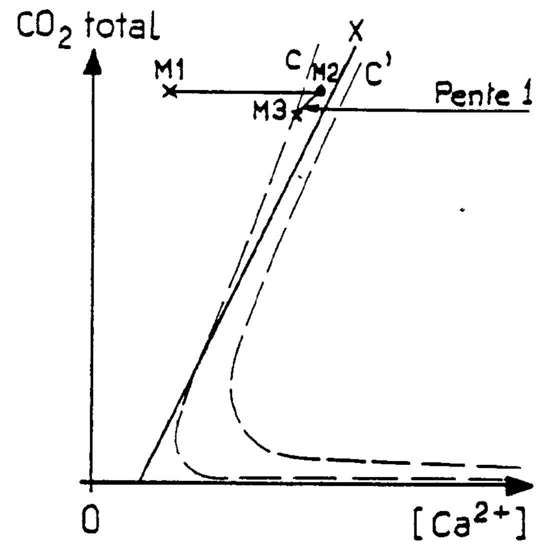


FIG_11

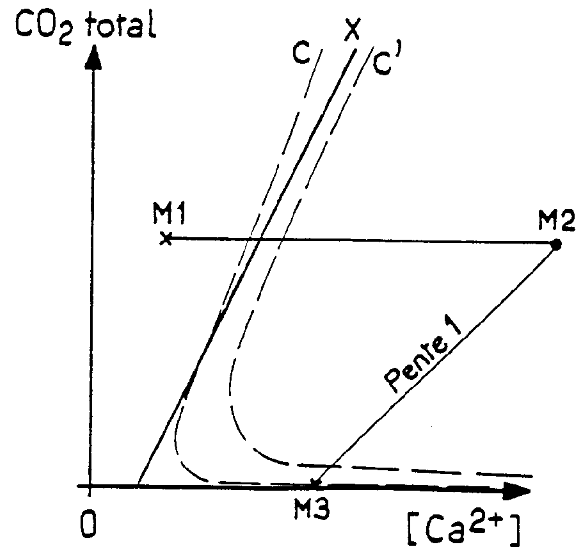

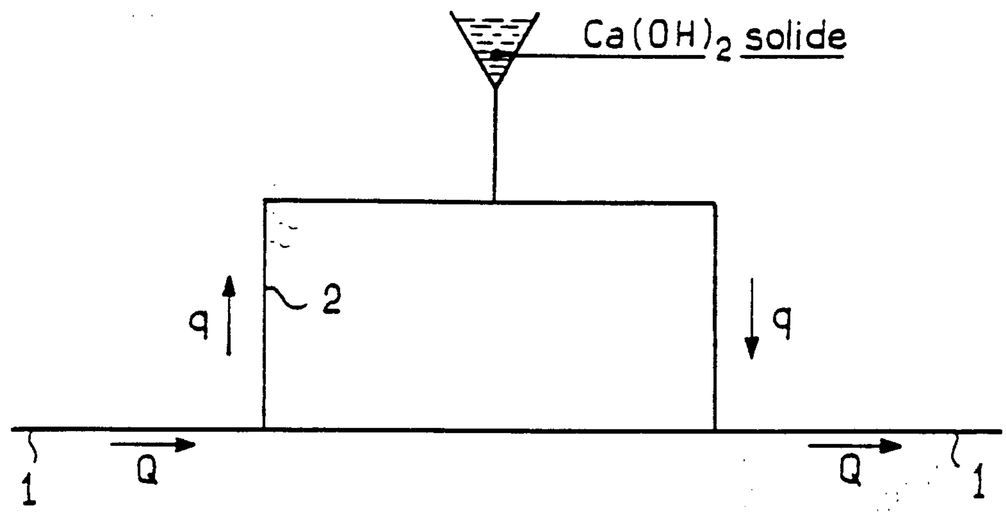


FIG_12

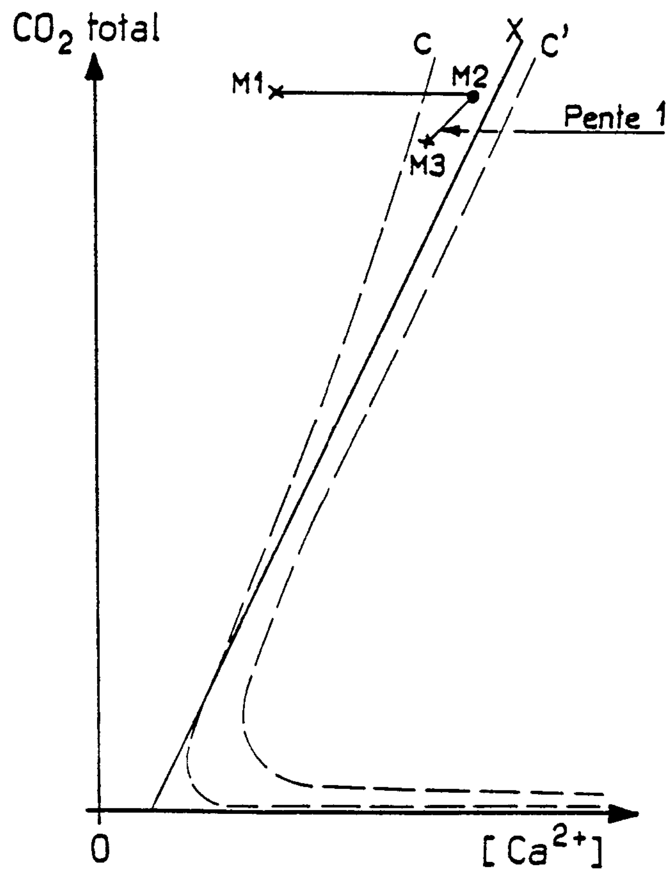


FIG_13

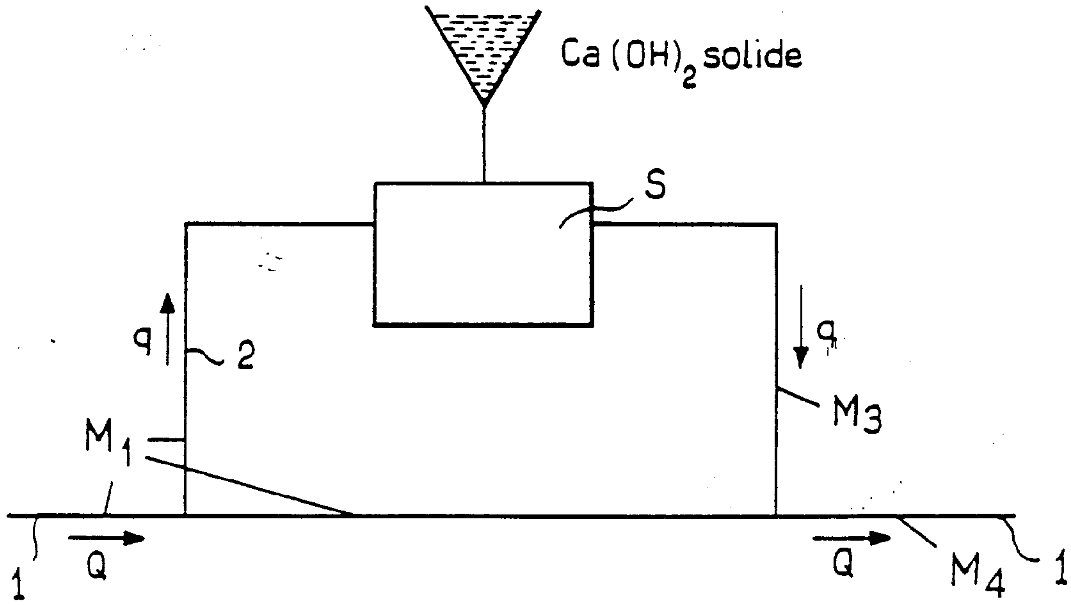
Ca (OH)2 solide
S
q
2
q
M1
M3
1
Q
Q
M4
1

FIG_14

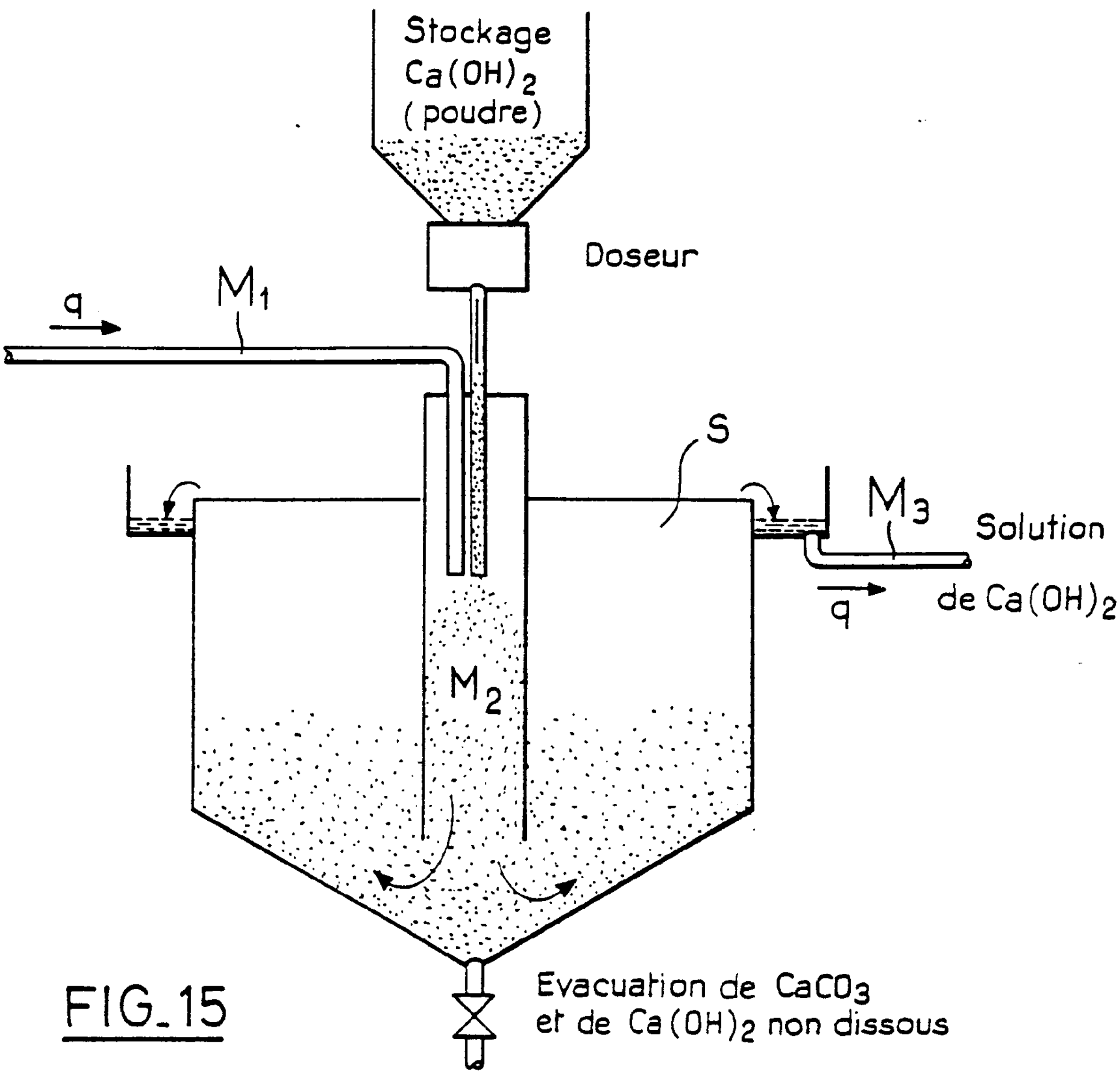
Stockage
Ca(OH)2
(poudre)
Doseur
q
M1
S
M3
Solution
de Ca(OH)2
q
M2
Evacuation de CaCO3
et de Ca(OH)2 non dissous

FIG_15

FIG_16

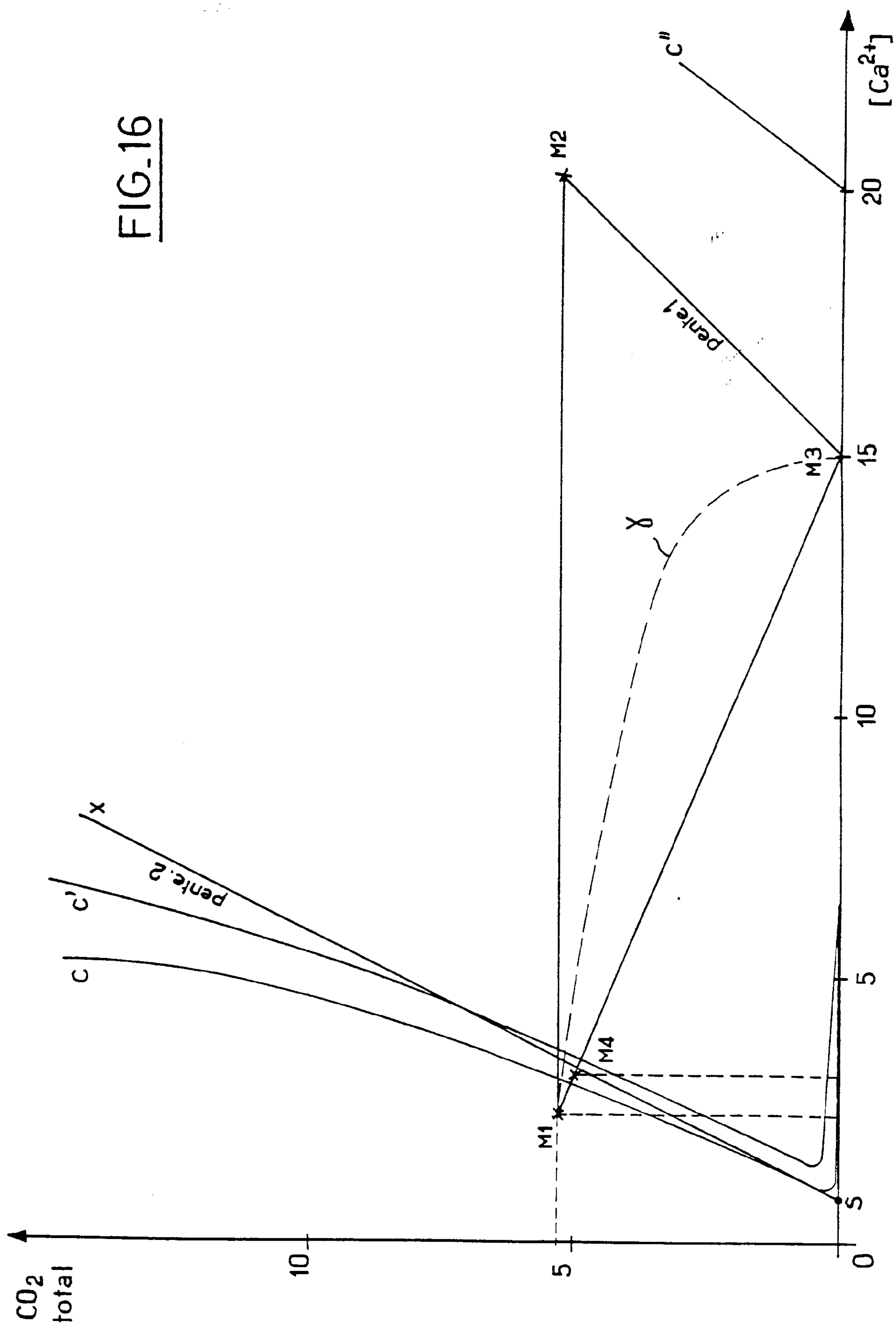

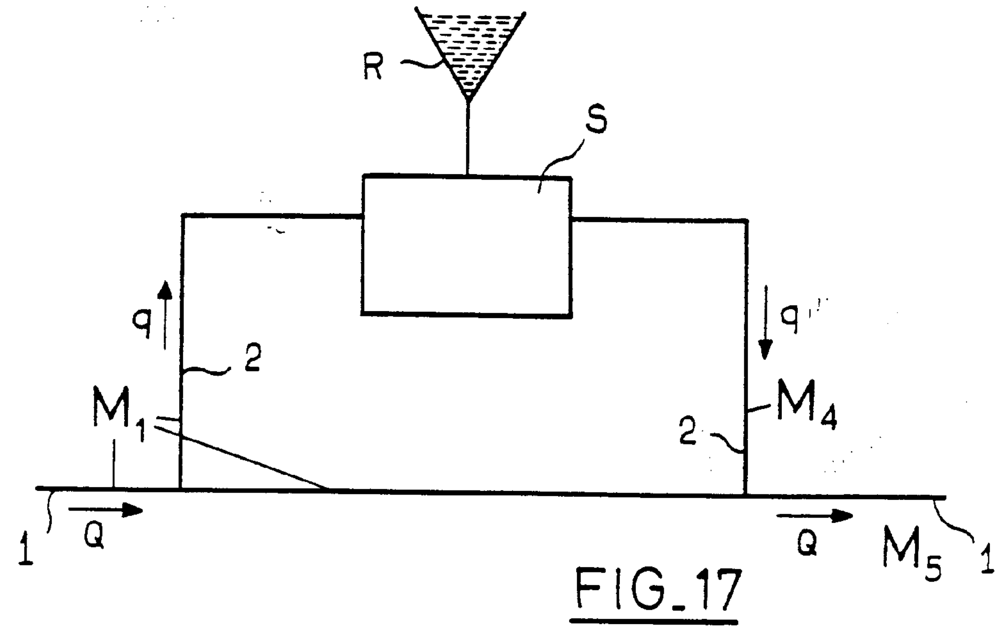
R
S
q
q''
2
M1
M4
2
1
Q
Q
M5
1

FIG_17

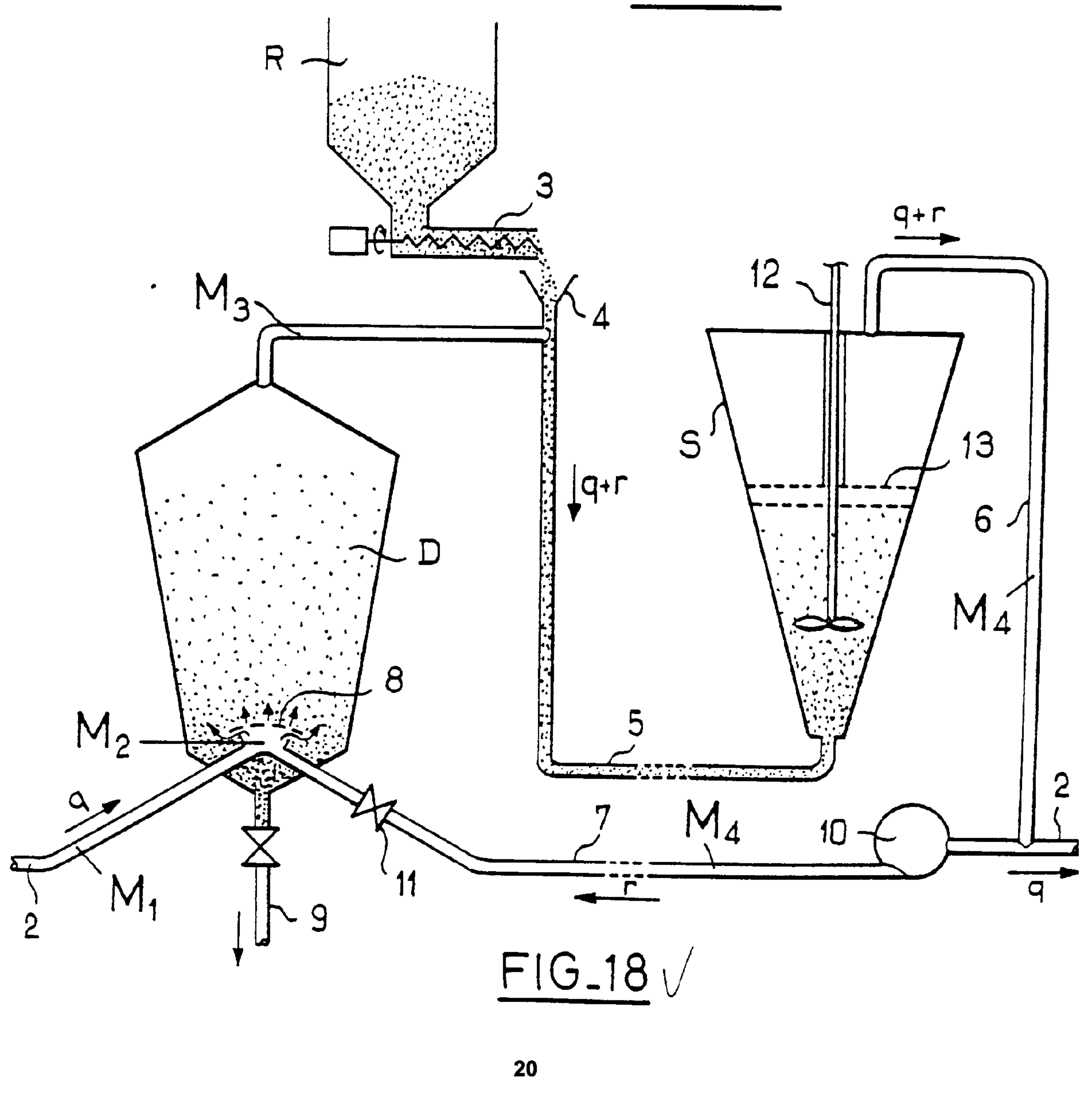
R
3
q+r
12
M3
4
S
13
q+r
6
D
M4
8
M2
5
2
q
10
7
M4
M1
11
r
q
2
9

FIG_18

FIG_19

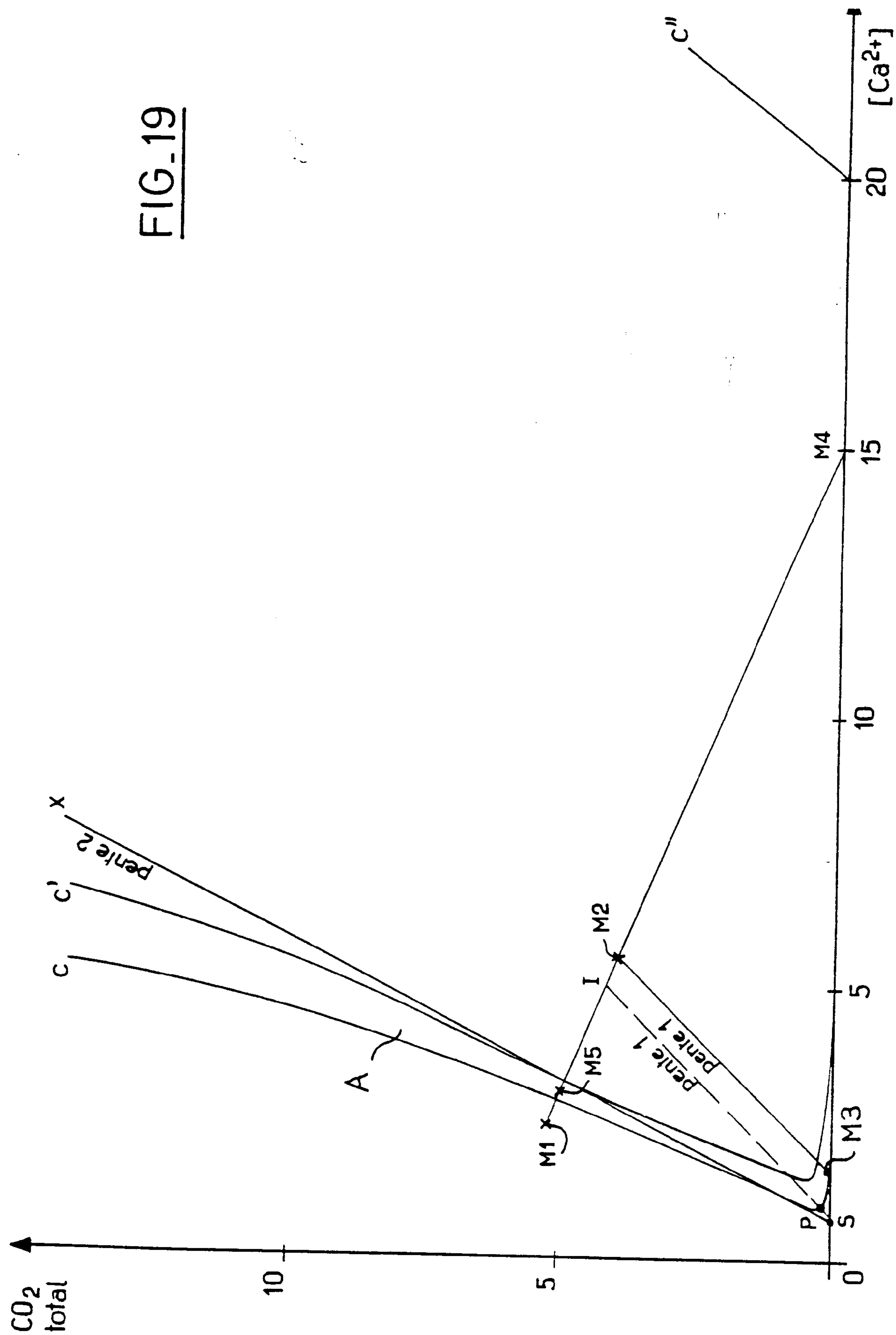
CO2 total
10
5
0
5
10
15
20
[Ca2+]
c
c'
c"
x
pente 2
pente 1
pente 1
A
I
M1
M2
M3
M4
M5
P
S